# EUROPÄISCHE PATENTSCHRIFT

(11) **EP 3 201 107 B1**
(45) Veröffentlichungstag und Bekanntmachung des Hinweises auf die Patenterteilung: **19.09.2018**
(21) Anmeldenummer: 15774914.4
(22) Anmeldetag: 02.10.2015
(51) Int. Cl.: B65G 43/02, G01B 7/00, A63G 4/00, A63G 1/00

(54) **MECHATRONISCHES SICHERHEITSSYSTEM FÜR FAHRGESCHÄFTE, INSBESONDERE ACHTERBAHNEN, KARUSSELLS ODER DERGLEICHEN**
MECHATRONIC SAFETY SYSTEM FOR AMUSEMENT RIDES, IN PARTICULAR ROLLER COASTERS, CAROUSELS OR THE LIKE
SYSTÈME DE SÉCURITÉ MÉCATRONIQUE POUR MANÈGES, EN PARTICULIER MONTAGNES RUSSES, CARROUSELS OU SIMILAIRES

(30) Priorität: 02.10.2014 DE 102014114338
(43) Veröffentlichungstag der Anmeldung: 09.08.2017
(73) Patentinhaber: Mack Rides GmbH & Co. KG, 79183 Waldkirch (DE)
(72) Erfinder: BURGER, Günter, 79183 Waldkirch (DE)
(74) Vertreter: Westphal, Mussgnug & Partner Patentanwälte mbB
(86) Internationale Anmeldenummer: PCT/EP2015/072782
(87) Internationale Veröffentlichungsnummer: WO 2016/050952

(56) Entgegenhaltungen:
- WO-A1-2008/128147
- CN-A- 101 576 445
- DE-A1- 4 430 252
- DE-A1- 19 746 272
- US-A- 2 857 056
- US-A- 4 679 957
- US-A- 5 865 543
- US-A1- 2006 065 151
- US-A1- 2010 174 495
- US-A1- 2010 250 047

## Beschreibung

Die Erfindung betrifft ein mechatronisches Sicherheitssystem für Fahrgeschäfte und ein Verfahren zur Erhöhung der Sicherheit von Fahrgeschäften.
Bekannt sind Sicherheitssysteme, die einen Verschleiß von Komponenten bei Fahrgeschäften überwachen. Beispielsweise offenbart die EP 1 464 919 B1 ein Verfahren und eine Vorrichtung zum Überwachen von Kettenverschleiß bei Kettenantriebseinheiten, die beispielsweise in Transportsystemen wie Freizeitfahrten, insbesondere Achterbahnen, verwendet werden.

Die DE4430252 A1 offenbart eine längs einer Laufschiene verfahrbare Laufwagenanordnung insbesondere für automatische Schiebetüren, Karusselltüren oder dergleichen. Die Laufwagenanordnung umfaßt zumindest eine im üblichen Betriebszustand auf der Laufschiene ablaufende Tragrolle und eine bei Versagen und/oder Ausfall der Tragrolle wirksam werdende und auf der Laufschiene ablaufende Sicherheitsrolle, wobei die Sicherheitsrolle zumindest im Bereich ihrer Lauffläche elektrisch leitfähig ist, worüber bei Ausfall der Tragrolle und der elektrischen Kontaktierung zwischen der Sicherheitsrolle und elektrisch leitfähiger Laufschiene eine elektrische Sicherheitseinrichtung auslösbar ist. Wird von den im Stand der Technik bekannten Sicherheitssystemen eine Beeinträchtigung der Sicherheit eines Fahrgeschäftes erkannt, beispielsweise eine Verschlechterung einer Trageigenschaft eines tragenden Bauteils, stellen die bekannten Sicherheitssysteme als Reaktion den Betrieb des Fahrgeschäftes sofort ein.
Hier setzt die Erfindung an.
Die Aufgabe der Erfindung besteht daher darin, ein Sicherheitssystem für Fahrgeschäfte bereitzustellen.
Die Aufgabe der Erfindung wird gelöst durch ein mechatronisches Sicherheitssystem für Fahrgeschäfte mit den Merkmalen des Patentanspruchs 1 und ein Verfahren zur Erhöhung der Sicherheit von Fahrgeschäften mit den Merkmalen des Patentanspruchs 20.
Mechatronische Systeme zeichnen sich dadurch aus, dass eine Sensorik zur Erfassung von Messgrößen eines Systemzustandes mit einer besonderen Mechanik des Systems wechselwirkt. Bei der vorliegenden Erfindung werden nämlich ein oder mehrere systemkritische Bauteile, insbesondere tragende Bauteile des Fahrgeschäftes mit redundanten Bauteilen in Wirkverbindung gebracht, die mindestens teilweise die Funktion des tragenden Bauteils im Fehlerfall übernehmen. Dies wird von der Sensorik detektiert, so dass anschließend das Fahrgeschäft sicher angehalten werden kann. Im Gegensatz zu bekannten Systemen muss daher bei einem Defekt nicht sofort das Fahrgeschäft notausgeschaltet werden. So kann beispielsweise ein Karussell noch in seine End- oder Startstellung gefahren werden. Das redundante mechanische Bauteil muss hierfür nicht zwingend mit dem zu sichernden Bauteil gekoppelt sein, eine Art Bypass Lösung ist auch denkbar. Die vorliegende Erfindung stellt ein Fahrgeschäft gemäß Anspruch 1 und ein Verfahren gemäß Anspruch 18 zur Erhöhung der Sicherheit von Fahrgeschäften bereit. Vorteilhafte Ausgestaltungen und Weiterbildungen der Erfindung sind in den Unteransprüchen angegeben.
Die erfindungsgemäße Vorrichtung zur Erhöhung der Sicherheit von Fahrgeschäften mit wenigstens einem mechatronischen System zeichnet sich dadurch aus, dass das mechatronische System erste Mittel aufweist zur Erkennung einer Änderung wenigstens eines Merkmals in wenigstens einem Bauteil eines Fahrgeschäftes und zweite Mittel zu einem Ausgleich der Änderung des Merkmals des Bauteils, für das eine Änderung von den ersten Mitteln erkannt wurde.
Der Vorteil einer derartigen Vorrichtung besteht darin, dass die Mittel ein die Sicherheit des Fahrgeschäftes beeinträchtigendes Merkmal, beispielsweise Trageigenschaften eines tragenden Bauteils eines Fahrgeschäftes, erfassen und verarbeiten können. Dabei kann dann beispielsweise die Tragfunktion eines tragenden Bauteils eines Fahrgeschäftes von den Mitteln übernommen werden.

Vorteilhafterweise ist die Vorrichtung an Bestandfahrgeschäften nachrüstbar. Dadurch können nicht nur Neuanlagen optional aufgerüstet werden, sondern auch die Sicherheit von Altanlagen nachträglich erhöht werden. Wesentliche, zeitaufwendige und kostspielige Eingriffe in Bestandskonstruktionen sind dabei nicht erforderlich.

Vorzugsweise ist ein Einsatz der zweiten Mittel von den ersten Mitteln steuerbar und/oder regelbar. Dadurch kann mit dem mechatronischen System vorteilhafterweise ein Regelkreis realisiert werden, wobei die ersten Mittel als Regelgröße Änderungen in Merkmalen von Bauteilen eines Fahrgeschäftes erkennen und die zweiten Mittel als Stellglieder einen detektierten Istwert eines Merkmals eines Bauteils auf einen vorgegebenen Sollwert einstellen.

Gemäß einer bevorzugten Ausgestaltung der Erfindung ist eine Änderung wenigstens eines Merkmals in wenigstens einem Bauteil von den ersten Mitteln während des Betriebs des Fahrgeschäftes erkennbar. Somit können auftretende Sicherheitsrisiken in Echtzeit detektiert werden. In bestimmten Zeitabschnitten durchgeführte Testfahrten von Fahrgeschäften zur Erkennung eines Sicherheitsrisikos sind daher nicht mehr erforderlich. Bei derartigen Testfahrten kann ein Sicherheitsrisiko, das sich zwischen zwei aufeinanderfolgenden Testfahrten einstellt, nicht erfasst werden, was ein Sicherheitsproblem für Fahrgeschäfte darstellt, die während den Testfahrten in Betrieb sind. Das Erkennen von Sicherheitsrisiken in Echtzeit hat folglich den Vorteil, dass auftretende Sicherheitsrisiken während des Betriebs des Fahrgeschäftes sofort erkannt werden können.

In einer Weiterbildung der Erfindung erfolgt der Ausgleich der Änderung des Merkmals des Bauteils, für das eine Änderung von den ersten Mitteln erkannt wurde, von den zweiten Mitteln während des Betriebs des Fahrgeschäftes. Ein möglicherweise auftretendes Sicherheitsrisiko kann somit während des Betriebs des Fahrgeschäftes behoben werden, ohne den Betrieb des Fahrgeschäftes einstellen zu müssen. Insbesondere kann das Sicherheitsrisiko für eine begrenzte Zeit behoben werden. Im Anschluss, das heißt nach Erkennen des Versagens des ausgefallenen primären Bauteils, ist die Anlage in einen sicheren Zustand zu bringen.

Vorzugsweise sind die zweiten Mittel während eines Nichterkennens einer Änderung wenigstens eines Merkmals in wenigstens einem Bauteil passiv und/oder bezüglich ihrer Sicherheitsfunktion unbelastet. Die ersten Mittel sind dagegen während des Betriebs des Fahrgeschäftes permanent im Einsatz. Um einen Verschleiß bzw. Verbrauch der zweiten Mittel zu reduzieren, erweist es sich als vorteilhaft, dass die zweiten Mittel nur dann in Einsatz kommen, wenn von den ersten Mitteln eine Änderung wenigstens eines Merkmals in wenigstens einem Bauteil erkannt wurde.

In einer vorteilhaften Ausgestaltung der Erfindung ist das mechatronische System an vorbestimmten Bauteilen, insbesondere beweglichen oder unbeweglichen Bauteilen, beispielsweise Schraubverbindungen, einsetzbar. Dies ermöglicht den Einsatz des mechatronischen Systems an Bauteilen, sogenannten "Hot - Spots", die während des Betriebs des Fahrgeschäftes besonders häufig hohen Belastungen ausgesetzt sind (z.B. Domlager, Wellen von Passagiergondeln, Auslegern, Gondelaufhängungen). Bei derartigen Bauteilen ist die Wahrscheinlichkeit für ein Auftreten eines Sicherheitsrisikos besonders hoch, weshalb es sich als vorteilhaft erweist, diese Bauteile überwachen zu können.

Vorzugsweise sind von den ersten Mitteln im Wesentlichen Änderungen insbesondere in einem Verschleiß und/oder eines Tragverhaltens erkennbar. Verschleiß und Änderungen eines Tragverhaltens sind die häufigsten Faktoren, die zu einem Sicherheitsrisiko führen.

In einer Weiterbildung der Erfindung ist von den ersten Mitteln ein Totalversagen oder Totalausfall wenigstens eines Bauteils erkennbar. Das Totalversagen eines Bauteils ist besonders sicherheitsrelevant und muss deswegen von einem Sicherheitssystem auf jeden Fall erkannt werden.

Vorzugsweise ist von den ersten Mitteln bei Erkennung des Totalversagens ein Notaus, also eine Notabschaltung für das Fahrgeschäft auslösbar. Gegenüber der aktuellen Reaktionsgeschwindigkeit des Betreiberpersonals kann von dem mechatronischen System ein Notaus schneller und sicherer eingeleitet werden.

Vorzugsweise weist das Fahrgeschäft als Bauteile, für die Änderungen in Merkmalen detektiert werden, Schweißbaugruppen, beispielsweise zusammengeschweißte Rohre, und/oder Bolzen, Verbindungselemente, insbesondere Schrauben, und/oder Gelenke auf. Diese Bauteile sind die am häufigsten verwendeten Bauteile an Fahrgeschäften und können besonders hohe Sicherheitsrisiken darstellen. Darüber hinaus kann das Fahrgeschäft weitere Mechanikkomponenten aufweisen, für die eine Änderung eines Merkmals von den ersten Mitteln detektiert werden kann.

In einer Weiterbildung der Erfindung weisen die ersten Mittel des mechatronischen Systems Komponenten zur Verarbeitung wenigstens eines elektrischen Signals auf. Elektrische Signale sind besonders einfach zu generieren, schnell auszuwerten und weiterzuleiten.
Vorzugsweise weisen die zweiten Mittel des mechatronischen Systems mechanische Module, insbesondere Tragelemente auf. Die mechanischen Module übernehmen bei Eintritt eines Sicherheitsrisikos die Primärfunktion des Fahrgeschäftes. Da tragende Bauteile von Baugeschäften ein besonders hohes Sicherheitsrisiko darstellen, ist es vorteilhaft, dass die zweiten Mittel Tragelemente aufweisen, um bei Eintritt eines Sicherheitsrisikos die Primärfunktion von Traqelementen bei Fahrgeschäften, nämlich die Tragfunktion, übernehmen zu können. Das Fahrgeschäft ist eine Achterbahn oder ein Karussell. Die Anwendung des mechatronischen Systems ist aber nicht nur auf eine bestimmte Art eines Fahrgeschäftes beschränkt, sondern kann auch in anderen Typen der Gattung eingesetzt werden.
Das erfindungsgemäße Verfahren zur Erhöhung der Sicherheit von Fahrgeschäften mit einer erfindungsgemäßen Vorrichtung zeichnet sich dadurch aus, dass bei einer Änderung wenigstens eines Merkmals in wenigstens einem Bauteil eines Fahrgeschäftes das mechatronische System die Änderung während des Betriebs des Fahrgeschäftes erkennt und einen Regelkreis ansteuert, der die Änderung ausgleicht. Je nach Fahrgeschäft kann ein Sicherheitsrisiko entweder in Echtzeit, z.B. bei Karussells, oder nahezu in Echtzeit, z.B. bei einer Achterbahn beim nächsten Aufenthalt im Bahnhof, detektiert und während des Betriebs des Fahrgeschäftes, ohne dieses abzuschalten, behoben werden.

Vorteilhafterweise schaltet bei dem Verfahren das mechatronische System bei einem von dem mechatronischen System erkannten Totalversagen wenigstens eines Bauteils eines Fahrgeschäftes das Fahrgeschäft notaus. Durch das mechatronische System ist ein Notaus schneller und sicherer einleitbar gegenüber der aktuellen Reaktionsgeschwindigkeit des Betreiberpersonals.

Vorzugsweise werden Prüfsignale während des Betriebs des Fahrgeschäftes permanent oder stichprobenartig generiert und ausgewertet, um die Verfügbarkeit des mechatronischen Systems zu überwachen. Damit kann auch eine Einsatzbereitschaft des mechatronischen Systems überwacht werden.

Die Erfindung wird anhand der nachfolgenden Figuren ausführlich erläutert. Es zeigen:
- Figur 1: eine ausschnittsweise dreidimensionale Ansicht eines Ausführungsbeispiels einer erfindungsgemäßen Vorrichtung mit einem Ausführungsbeispiel eines mechatronischen Systems,
- Figur 2: eine Detailansicht des mechatronischen Systems nach Figur 1,
- Figur 3: eine Schnittdarstellung des mechatronischen Systems nach Figur 1,
- Figur 4: schematisch ein Tragelement in Form eines Hohlrohres im intakten Zustand,
- Figur 5: das in Figur 4 gezeigte Hohlrohr im gebrochenen Zustand und damit im Fehlerfall,
- Figur 6: ein weiteres Beispiel einer Welle mit innenliegendem Bolzen, und
- Figur 7: eine Ausschnittvergrößerung des in Figur 6 gezeigten Bolzens.

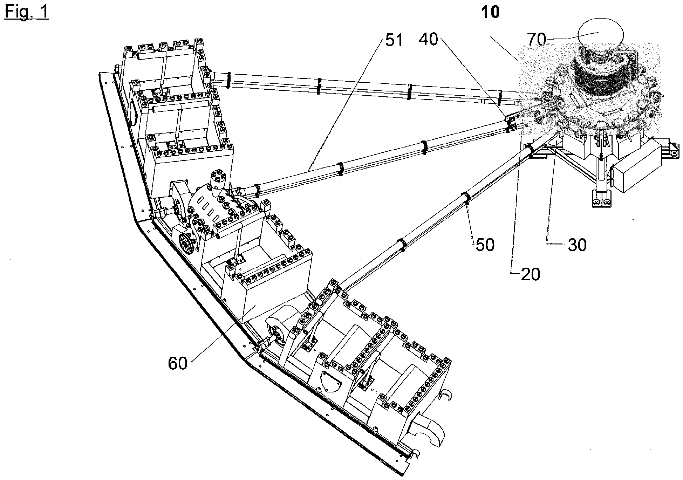

Um unnötige Wiederholungen zu vermeiden, werden im Folgenden die Figuren 1, 2 und 3 gemeinsam beschrieben. Gleiche Bezugsziffern in den Figuren bezeichnen jeweils gleiche Bezugsteile.

In Figur 1 entsprechen Verbindungsstangen 51, die Karussellfiguren, vorliegend Fahrgestelle 60, mit einer vertikalen Drehachse 70 verbinden, Bauteilen 50, für die eine Merkmalsänderung erkannt werden soll. Die Bauteile 50, die an der vertikalen Drehachse 70 mittels Gabelköpfen 31 angebracht sind, führen während des Betriebs des Karussells eine überlagerte Bewegung aus. Zum einen drehen die Bauteile 50 sich um die vertikale Drehachse 70, zum anderen führen die Bauteile 50 eine durch die Gabelköpfe 31 geführte Auf- und Abwärtsbewegung entlang der vertikalen Drehachse 70 aus. Während der Auf- und Abwärtsbewegung tragen die Bauteile 50 das Gewicht der Fahrgestelle 60 und übernehmen somit eine Tragfunktion. Von dem mechatronischen System 20 in Figur 1 wird lediglich ein Bauteil 50 erfasst. Vorteilhafterweise kann an jeder Verbindungsstange 51 des Karussells ein mechatronisches System 20 angebracht oder nachgerüstet werden.

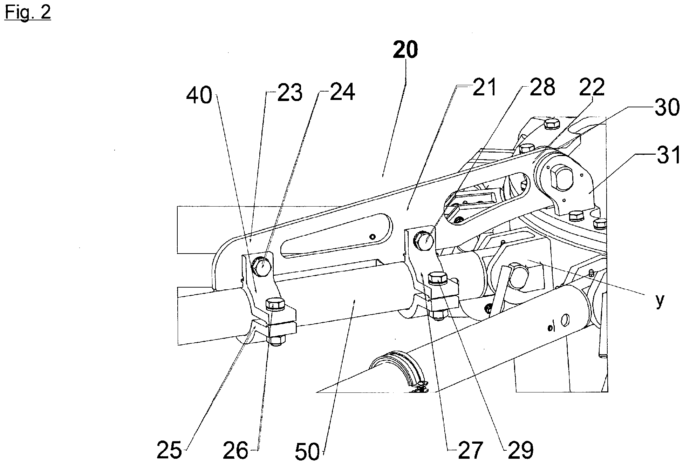

Figur 2 zeigt besonders deutlich, wie das mechatronische System 20 an Bauteilen 50 des Karussells angebracht ist. An seinem einen Ende 22 ist ein Gelenk 21 mittels eines Gabelkopfes 31 an der vertikalen Drehachse 70 des Karussells angebracht, das eine Verbindung zwischen dem Bauteil 50 und dem Gabelkopf 31 darstellt. An dem anderen Ende 23 des Gelenks 21 ist mittels einer Schraubverbindung 24 eine erste Rohrschelle 25 angebracht. Die erste Rohrschelle 25 umgreift das Bauteil 50 und spannt dieses mittels einer Schraubverbindung 26 ein. Zwischen den beiden Enden 22, 23 des Gelenks 21 ist eine zweite Rohrschelle 27 mittels einer Schraubverbindung 28 angebracht. Die zweite Rohrschelle 27 umgreift ebenfalls das Bauteil 50 und spannt dieses mittels einer Schraubverbindung 29 ein.

Das Gelenk 21 zusammen mit dem an der vertikalen Drehachse 70 angebrachten Gabelkopf 31 sowie der ersten 25 und der zweiten Rohrschelle 27 übernimmt einen Teil des mechatronischen Systems 20. Sollte während des Betriebs des Karussells die Tragfunktion des Bauteils 50 beeinträchtigt werden, beispielswiese durch Materialverschleiß an dem Gabelkopf 31, der die Auf- und Abwärtsbewegung des Bauteils 50 führt und während des Betriebs des Karussells besonders hohen Belastungen ausgesetzt ist, dann kann dieser Teil die Tragfunktion des Bauteils 50 übernehmen. Der Materialverschleiß kann aber auch an einem Bauteil auftreten, das eine Primärfunktion des Fahrgeschäftes übernimmt. Der Gabelkopf 31 als Teil eines sekundären Systems ist mit seinem Anschluss an das Bauteil 50 redundant zu einem Gelenk Y, an dem das Bauteil 50 gelagert ist.

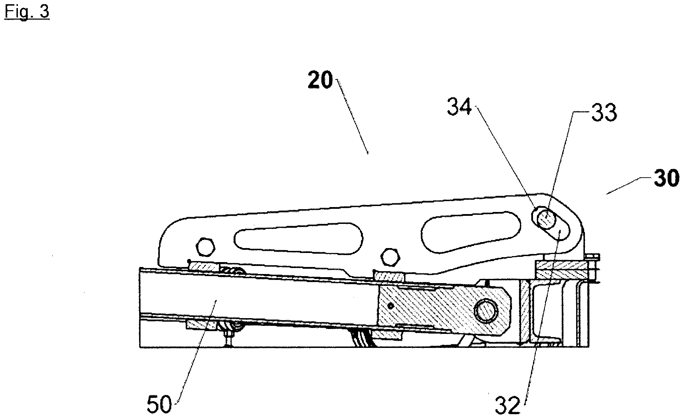

Die Schnittdarstellung der Figur 3 verdeutlicht, wie eine Änderung der Tragfunktion des Bauteils 50 und damit das Wirksamwerden der Funktion des redundanten Teils erkannt werden kann. Das Ende 22 des Gelenks 21, mit dem das Gelenk 21 mittels eines Gabelkopfes 31 an der vertikalen Drehachse 70 angebracht ist, weist eine Aussparung 32 auf, durch die ein Befestigungsmittel 33, beispielswiese ein Klemmbolzen, hindurchgeht zur Befestigung des Gelenks 21 an dem Gabelkopf 31. Die Aussparung 32 ist derartig dimensioniert, dass bei einem im Hinblick auf auftretende Sicherheitsrisiken normalen Betrieb des Karussells zuzüglich definierter Toleranzbereiche der Rand 34 der Aussparung 32 nicht in Kontakt mit dem durch die Aussparung 32 hindurchgehenden Befestigungsmittel 33 kommt. Stellt sich während des Betriebs des Karussells eine die Sicherheit des Karussells beeinträchtigende Veränderung der Tragfunktion des Bauteils 50 ein, das heißt ändert sich die Auf-und Abwärtsbewegung des Bauteils 50 in einem nicht zu vernachlässigbaren Bereich, kommt bei entsprechender Dimensionierung der Aussparung 32 das Befestigungsmittel 33 mit dem Rand 34 der Aussparung 32 in Kontakt. Damit stellt die passend dimensionierte Aussparung 32 ein Mittel 30 dar, das die Änderung der Tragfunktion des Bauteils 50 und das Wirksamwerden der Tragfunktion des Gelenks 21 erkennt. Das durch die Aussparung 32 hindurchgehende Befestigungselement 33 und die Aussparung 32 können dabei derartig ausgeführt sein, dass bei einem Kontaktieren des Randes 34 der Aussparung 32 mit dem Befestigungsmittel 33 ein elektrisches Signal generiert wird, das als Warn- bzw. Notsignal ausgelesen werden kann.

Wird das Kontaktieren des Randes 34 der Aussparung 32 mit dem durch diese hindurchgehenden Befestigungsmittel 33 vorteilhafterweise durch einen Kraftsensor erfasst, kann bei einer einen definierten Maximalbetrag überschreitenden erfassten Kontaktkraft, die einem Totalversagen des Bauteils 50, insbesondere des Gabelkopfes 31, entsprechen würde, das Karussell von den ersten Mitteln 30 notausgeschaltet werden.

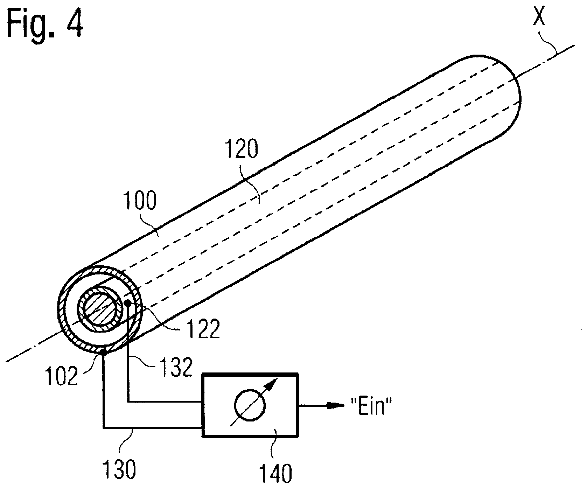

In Figur 4 ist ein weiteres Beispiel eines Bauteils dargestellt, wie es in Fahrgeschäften häufig verwendet wird. Hierbei handelt es sich um ein Hohlrohr 100, wie es beispielsweise als Tragrohr oder Radwelle in einem Fahrgeschäft Verwendung finden kann. Das Hohlrohr 100 kann auch eine Hohlwelle sein. Konzentrisch zur Mittenachse X befindet sich im Inneren dieses Hohlrohres 100 eine Stange 120. Die Stange 120 kann auch eine Welle sein. Das Hohlrohr 100 und die Stange 120, die beispielsweise aus Metall bestehen, berühren sich nicht, sind jedoch mit geeigneten elektrischen Kontakten 102, 122 versehen. Die Kontakte 102, 122 stellen jeweils Kontaktbereiche dar. Diese Kontakte 102, 122 stehen über Leitungen 130, 132 mit einer Steuereinheit 140 in Verbindung. Die Steuereinheit 140 überprüft, ob die Kontakte 102, 122 miteinander in Berührung stehen oder nicht. Im Idealfall, also bei intakter Hohlwelle 100, sind die Kontakte 102 und 122 nicht miteinander verbunden. Der Kontakt 102 steht hierfür beispielsweise mit einer leitfähigen Beschichtung, die an der Innenwandung des Hohlrohrs 100 angebracht ist, in elektrischer Verbindung. Der Kontakt 122 ist beispielsweise mit einer leitenden Beschichtung auf der Außenseite der Stange 120 in Verbindung. Die erwähnten leitfähigen Beschichtungen sind vorzugsweise ganzflächig auf der Innenseite des Hohlrohrs 100 und ganzflächig auf der Außenseite der Stange 120 angebracht. Da sich das Hohlrohr 100 und die Stange 120 im intakten Zustand der Hohlrohrs 100 nicht berühren, erfasst die Steuereinheit 140 auch keinen Kurzschluss zwischen den Kontakten 102, 122. Ein ordnungsgemäßer Betrieb kann von der Steuereinheit 140 signalisiert werden, beispielsweise dadurch, dass ein "Ein" Signal von der Steuereinheit 140 ausgegeben wird.

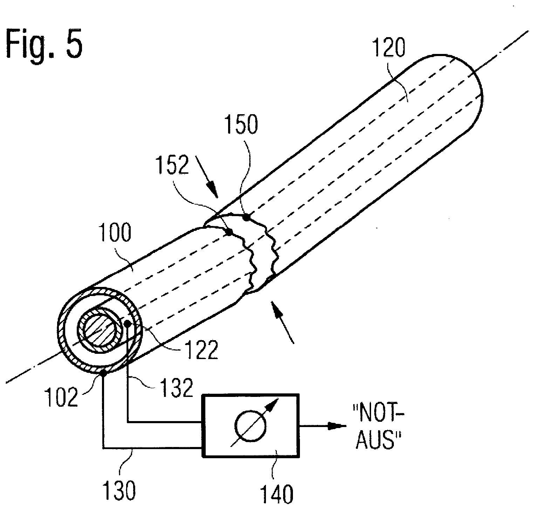

In Figur 5 ist der Bruch des Hohlrohrs 100 schematisch dargestellt. Ein solcher Bruch kann beispielsweise durch Materialermüdung des Hohlrohrs 100 oder eine plötzliche äußere mechanische Belastung auftreten. Die Bruchstelle des Hohlrohrs 100 ist mit Pfeilen in Figur 5 markiert. Dieser Bruch des Hohlrohrs 100 führt dazu, dass die Abschnitte des Hohlrohrs 100 auf die separat gehaltene, innenliegende Stange 120 auftreffen. Dabei gelangt die leitfähige Beschichtung auf der Innenseite des Hohlrohrs 100 mit der leitfähigen Beschichtung auf der Außenseite der Stange 120 in Kontakt. Diese Kontaktstellen sind in Figur 5 mit den Bezugszeichen 150 und 152 markiert. Dieser Kurzschluss wird über die Kontakte 102, 122 und die Leitungen 130, 132 der Steuereinheit 140 zugeführt, die ein Signal dieser Fehlfunktion des Hohlrohrs 100 anzeigt. Da die im Inneren des Hohlrohrs 100 befindliche Stange 120 jedoch noch die Tragfunktion des Hohlrohrs 100 zumindest zeitweise übernimmt, braucht das Fahrgeschäft nicht unmittelbar nach dem Bruch notausgeschaltet werden. Vielmehr ist es möglich, dass das Fahrgeschäft beispielsweise seine augenblickliche Fahrt zu Ende führt und erst dann für weitere Fahrten gesperrt wird.

Wenngleich im Zusammenhang mit dem Ausführungsbeispiel von Figur 4 und Figur 5 davon die Rede ist, dass die Überwachung des Defekts des Hohlrohrs 100 elektrisch erfolgt, ist dies ohne Weiteres auch durch eine optische Überwachung, beispielsweise über Scanner, möglich. Die Überwachung kann auch elektromagnetisch, beispielsweise über Funk, Bluetooth und/oder Wlan etc. erfolgen.

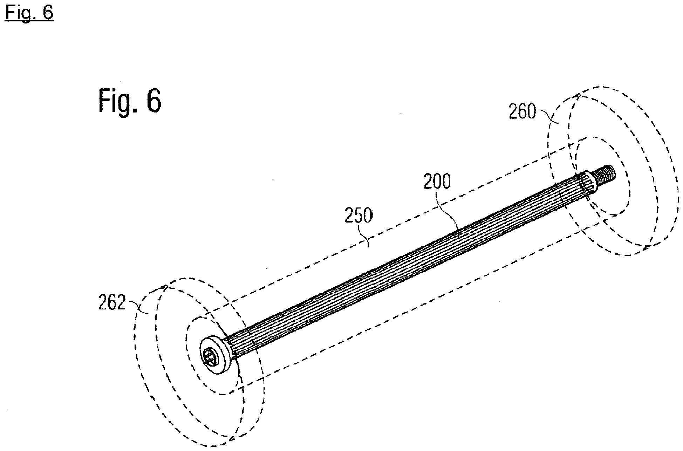

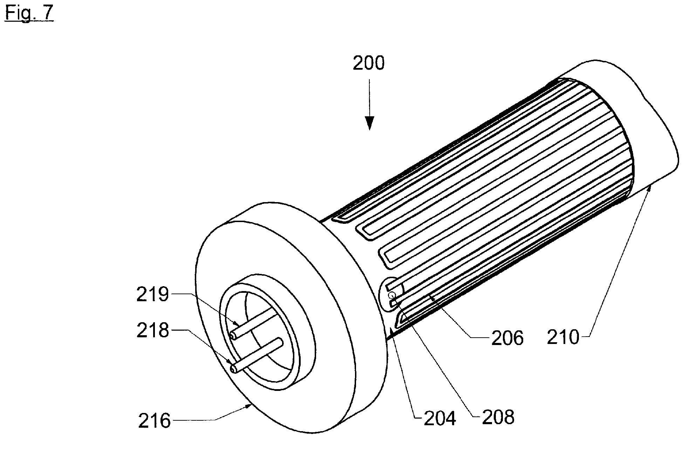

In einer Weiterbildung der Erfindung ist es auch möglich, einen ständigen Kontakt zwischen der Stange 120 und dem Hohlrohr 100 im intakten Zustand des Hohlrohrs 100 zur Verfügung zu stellen und erst dann, wenn dieser ständige Kontakt unterbrochen wird, das Fehlersignal zu generieren. Ein solches Ausführungsbeispiel wird im Zusammenhang mit den Figuren 6 und 7 näher erläutert.

Figur 6 zeigt wiederum eine Welle 250 an der links und rechts zwei Räder 260, 262 angeordnet sind. Im Inneren der Welle 250 sitzt jetzt ein Bolzen 200, der in Figur 7 detaillierter dargestellt ist. Der Bolzen 200 ist innerhalb der Welle 250 angeordnet. Hierfür ist die Welle 250 wiederum hohl ausgebildet. Der Bolzen 200 ist derart ausgelegt, dass er die Lasten der Welle 250 im Falle eines Bruches nicht tragen kann. In diesem Fall übernehmen andere form- und kraftschlüssige Geometrien die Sicherheitsfunktion, beispielsweise eine Tragfunktion, bis zur Abschaltung. Bricht die Welle 250, die auch lediglich ein Verbindungsbolzen sein kann, dann bricht in Folge der Überlastung auch der Bolzen 200. Auf dem Bolzen 200 ist zur Detektion dieses Bruches zwischen zwei Isolierschichten 204, 210 eine mikrostrukturierte Leiterbahn 206 in Form eines Mäanders aufgebracht. Es können auch mehrere solcher Leiterbahnen parallel verlaufen, so dass eine Überwachung mehrkanalig und somit redundant möglich wäre. Bricht der Bolzen 200 aufgrund der Überlastung, so wird die erwähnte Leiterbahn 206 ebenfalls an mindestens einer Stelle unterbrochen. Diese Unterbrechung führt zu einer signifikanten Änderung des elektrischen Widerstandes von niederohmig auf hochohmig, was durch eine geeignete Steuereinheit, die an die elektrischen Anschlüsse 218, 219, die mit der Leiterbahn 206 in Verbindung stehen, weitergeleitet wird.

Im Ergebnis wird bei dieser Anordnung bei Bruch der Welle 250 kein Kontakt geschlossen, sondern dauerhaft ein geschlossener Kontakt geöffnet, um ein Fehlsignal von der Steuereinheit zu generieren. Anzumerken ist abschließend, dass aus Gründen der Übersichtlichkeit in Figur 6 und 7 davon abgesehen worden, ein Bauteil, das im Falle des Bruches der Welle 250 dessen Tragfähigkeit übernimmt, darzustellen. Das in Figur 7 noch zusätzlich erwähnte Bezugszeichen 216 bezeichnet einen Ring 216 zur Montage des Bolzens 200 innerhalb der Welle 250.

### Bezugszeichenliste

- 10: Vorrichtung

- 20: Mechatronisches System
- 21: Gelenk
- 22: Ende
- 23: Ende
- 24: Schraubverbindung
- 25: Rohrschelle
- 26: Schraubverbindung
- 27: Rohrschelle
- 28: Schraubverbindung
- 29: Schraubverbindung

- 30: Mittel
- 31: Gabelkopf
- 32: Aussparung
- 33: Befestigungsmittel
- 34: Rand

- 40: Mittel

- 50: Bauteil
- 51: Verbindungsstange

- 60: Fahrgestell

- 70: Drehachse

- 100: Hohlrohr
- 102: Kontakt
- 120: Stange
- 122: Kontakt
- 130: Leitung
- 132: Leitung
- 140: Steuereinheit
- 150: Berührungsbereich
- 152: Berührungsbereich

- 200: Bolzen
- 204: Isolationsschicht
- 206: leitfähige Schicht
- 208: Bohrung
- 210: Isolationsschicht
- 216: Welle
- 218: Steckverbinder
- 219: Steckverbinder
- 250: Welle
- 260: Rad
- 262: Rad

- X: Achse
- Y: Gelenk

## Patentansprüche

1. Fahrgeschäft, nämlich Karussell oder Achterbahn , mit einer Vorrichtung (10) zur Erhöhung der Sicherheit dieses Fahrgeschäftes, mit wenigstens einem mechatronischen System (20), welches mechanische Mittel (30) aufweist, um bei einem Defekt eines mechanischen Bauteils des Fahrgeschäftes vollständig oder mindestens teilweise die Funktion des defekten mechanischen Bauteils zu übernehmen, sowie weitere Mittel (40), um einen Defekt des mechanischen Bauteils zu detektieren und ein Fehlersignal bereitzustellen,
**dadurch gekennzeichnet, dass** das mechanische Bauteil ein eine Tragfunktion eines Fahrgestells des Fahrgeschäfts übernehmendes Bauteil ist, dass die mechanischen Mittel (30) diese Tragfunktion erst bei einem Defekt des mechanischen Bauteils übernehmen, und dass die weiteren Mittel (40) optische Mittel zur Überwachung des mechanischen Bauteils oder zumindest teilweise an dem mechanischen Bauteil angeordnete elektrische Mittel umfassen.

2. Fahrgeschäft (10) nach Anspruch 1,
**dadurch gekennzeichnet, dass** die elektrischen Mittel (40) ein Notaussignal generieren.

3. Fahrgeschäft (10) nach Anspruch 1 oder 2,
**dadurch gekennzeichnet, dass** die mechanische Mittel (30) ein redundantes weiteres Bauteil aufweisen, um die Funktion des mechanischen Bauteils zu übernehmen, wobei das mechanische Bauteil und das weitere Bauteil mit einer Steuereinrichtung gekoppelt sind.

4. Fahrgeschäft (10) nach Anspruch 3,
**dadurch gekennzeichnet, dass** die Kopplung der Steuereinrichtung (140) mit dem mechanischen Bauteil und dem weiteren Bauteil elektronisch, elektromagnetisch und/oder optisch gebildet ist.

5. Fahrgeschäft (10) nach einem der Ansprüche 1 bis 6,
**dadurch gekennzeichnet, dass**
das mechanische Bauteil ein Hohlrohr (100) ist, in welchem eine Stange (120) als zweites Bauteil sitzt.

6. Fahrgeschäft (10) nach Anspruch 5,
**dadurch gekennzeichnet, dass** das Hohlrohr (100) und die Stange (120) elektrisch und/oder optisch derart miteinander gekoppelt sind und dass eine Berührung von Hohlrohr (100) und Stange (120) ein Fehlersignal in einer Steuereinheit (140) bereitstellt.

7. Fahrgeschäft (10) nach Anspruch 1 bis 6,
**dadurch gekennzeichnet, dass**
die Vorrichtung (10) an Bestandfahrgeschäften nachrüstbar ist.

8. Fahrgeschäft (10) nach einem der vorangehenden Ansprüche,
**dadurch gekennzeichnet, dass**
eine Änderung wenigstens eines Merkmals in wenigstens einem Bauteil (50) von den elektrischen Mitteln (40) während des Betriebs des Fahrgeschäftes erkennbar ist.

9. Fahrgeschäft (10) nach einem der vorangehenden Ansprüche,
**dadurch gekennzeichnet, dass**
der Ausgleich der Änderung des Merkmals des Bauteils (50), für das eine Änderung von den elektrischen Mitteln (40) erkannt wurde, von den zweiten Mitteln (30) während des Betriebs des Fahrgeschäftes erfolgt.

10. Fahrgeschäft (10) nach einem der vorangehenden Ansprüche,
**dadurch gekennzeichnet, dass**
die mechanischen Mittel (30) während eines Nichterkennens einer Änderung wenigstens eines Merkmals in wenigstens einem Bauteil (50) passiv und/oder bezüglich ihrer Sicherheitsfunktion unbelastet sind.

11. Fahrgeschäft (10) nach einem der vorangehenden Ansprüche,
**dadurch gekennzeichnet, dass**
das mechatronische System (20) an beweglichen oder unbeweglichen Bauteilen (50) angeordnet ist.

12. Fahrgeschäft (10) nach einem der vorangehenden Ansprüche,
**dadurch gekennzeichnet, dass**
von den elektrischen Mitteln (40) ein Verschleiß und/oder eine Tragverhaltensänderung an einem Bauteil (50) erkennbar sind.

13. Fahrgeschäft (10) nach einem der vorangehenden Ansprüche,
**dadurch gekennzeichnet, dass**
von dem elektrischen Mittel (40) ein Totalversagen wenigstens eines Bauteils (50) erkennbar ist.

14. Fahrgeschäft (10) nach Anspruch 13,
**dadurch gekennzeichnet, dass**
von dem elektrischen Mittel (40) bei Erkennung des Totalversagens ein Notaus für das Fahrgeschäft auslösbar ist.

15. Fahrgeschäft (10) nach einem der vorangehenden Ansprüche,
**dadurch gekennzeichnet, dass**
das Fahrgeschäft als Bauteile (50) Schweißbaugruppen und/oder Bolzen, Verbindungselemente, insbesondere Schrauben, und/oder Gelenke aufweist.

16. Fahrgeschäft (10) nach einem der vorangehenden Ansprüche,
**dadurch gekennzeichnet, dass**
die elektrischen Mittel (40) des mechatronischen Systems (20) Komponenten zur Verarbeitung wenigstens eines elektrischen Signals aufweisen.

17. Fahrgeschäft (10) nach einem der vorangehenden Ansprüche,
**dadurch gekennzeichnet, dass**
die mechanischen Mittel (30) des mechatronischen Systems (20) mechanische Module, insbesondere Tragelemente, aufweisen.

18. Verfahren (10) zur Erhöhung der Sicherheit von Fahrgeschäften, nämlich Karussells oder Achterbahnen nach einem der Ansprüche 1 bis 17 mit folgenden Schritten:
- Bereitstellen einer Sensoreinrichtung die erfasst, wann das zu sichernde mechanisches Bauteil in seiner Funktion vor einem redundanten Bauteil ersetzt wird, wobei die Sensoreinrichtung zumindest teilweise an dem zu sichernden Bauteil angeordnet ist; und
- Generierung eines Fehlersignals, sobald die Sensoreinrichtung die übernommene Tragfunktion erfasst.

19. Verfahren (10) nach Anspruch 18,
**dadurch gekennzeichnet, dass**
bei einem von dem mechatronischen System (20) erkannten Totalversagen wenigstens eines Bauteils (50) eines Fahrgeschäftes das mechatronische System (20) das Fahrgeschäft notausschaltet.

20. Verfahren (10) nach Anspruch 18 oder 19,
**dadurch gekennzeichnet, dass** Prüfsignale während des Betriebs des Fahrgeschäftes permanent oder stichprobenartig generiert und ausgewertet werden, um die Verfügbarkeit des mechatronischen Systems zu überwachen.

## Claims

1. Amusement ride, i.e. carousel or roller coaster, with an apparatus (10) for increasing the safety of this amusement ride with at least one mechatronic system (20), which comprises mechanical means (30) to fully or at least partially take over the function of the defective mechanical component in the event of a defect of a mechanical component of the amusement ride as well as further means (40) to detect a defect of the mechanical component and provide an error signal, **characterized in that** the mechanical component is a component taking over a load-bearing function of a chassis of the amusement ride, **in that** the mechanical means (30) only takes over this load-bearing function in the event of a defect of the mechanical component and **in that** the further means (40) comprises optical means or electrical means arranged at least partly on the mechanical component for monitoring the mechanical component.

2. Apparatus (10) according to claim 1, **characterized in that** the electrical means (40) generates an emergency stop signal.

3. Apparatus (10) according to claim 1 or 2, **characterized in that** the mechanical means (30) comprises a redundant further component to take over the function of the mechanical component, the mechanical component and the further component being coupled to a control unit.

4. Apparatus (10) according to claim 3, **characterized in that** the coupling of the control unit (140) is formed with the mechanical component and the further component electronically, electromagnetically and/or optically.

5. Apparatus (10) according to any one of claims 1 to 6, **characterized in that** the mechanical component is a hollow tube (100), in which a rod (120) is located as a second component.

6. Apparatus (10) according to claim 5, **characterized in that** the hollow tube (100) and the rod (120) are electrically and/or optically coupled to one another in such a way that a contact of the hollow tube (100) and the rod (120) provides an error signal in a control unit (140).

7. Apparatus (10) according to claims 1 to 6, **characterized in that** the apparatus (10) can be retrofitted to existing rides.

8. Apparatus (10) according to any one of the above claims, **characterized in that** a change of at least one characteristic in at least one component (50) of the electrical means (40) is detectable during the operation of the ride.

9. Apparatus (10) according to any one of the above claims, **characterized in that** the change of the characteristic of the component (50), for which a change is detected by the electrical means (40) is compensated by the second means (30) during the operation of the ride.

10. Apparatus (10) according to any one of the above claims, **characterized in that** the mechanical means (30) passively and/or with regard to their safety function is unstressed during a non-detection of change of at least one characteristic in at least one component (50).

11. Apparatus (10) according to any one of the above claims, **characterized in that** the mechatronic system (20) is arranged on movable or immovable components (50).

12. Apparatus (10) according to any one of the above claims, **characterized in that** the electrical means (40) can detect wear and/or a change of the bearing capacity in one component (50).

13. Apparatus (10) according to any one of the above claims, **characterized in that** the electrical means (40) can detect a total failure of at least one component (50).

14. Apparatus (10) according to claim 13, **characterized in that** the electrical means (40) can trigger an emergency stop of the ride upon detection of total failure.

15. Apparatus (10) according to any one of the above claims, **characterized in that** the amusement ride (50) has as components welded assemblies and/or bolts, fasteners, in particular screws and/or joints.

16. Apparatus (10) according to any one of the above claims, **characterized in that** the electrical means (40) of the mechatronic system (20) comprises components for processing at least one electrical signal.

17. Apparatus (10) according to any one of the above claims, **characterized in that** the mechanical means (30) of the mechatronic system (20) comprises mechanical modules, in particular load-bearing elements.

18. Method (10) for increasing the safety of amusement rides, i.e. carousels or roller coasters according to any one of claims 1 to 17 with the following steps:
- providing a sensor device, which detects when the mechanical component to be protected in its function is replaced by a redundant component, wherein the sensor device is arranged at least partly on the component to be protected; and
- generation of an error signal as soon as the sensor device detects a load-bearing function has been taken over.

19. Method (10) according to claim 18, **characterized in that** the mechatronic system (20) performs an emergency stop of the ride when a total failure of at least one component (50) of a ride is detected by the mechatronic system (20).

20. Method (10) according to claim 18 or 19, **characterized in that** test signals are permanently or randomly generated and evaluated during operation of the ride to monitor the availability of the mechatronic system.

## Revendications

1. Attraction foraine, à savoir carrousel ou montagnes russes comportant un dispositif (10) permettant d'augmenter sa sécurité, comprenant au moins un système mécatronique (20) qui comporte des moyens mécaniques (30) permettant, en cas de défaut d'un composant mécanique de cette attraction foraine d'assurer totalement ou au moins partiellement la fonction de ce composant mécanique défectueux, ainsi que d'autres moyens (40) permettant de détecter un défaut du composant mécanique et de fournir un signal de défaut,
**caractérisée en ce que**
le composant mécanique est un composant assurant la fonction de support d'un châssis de l'attraction foraine, les moyens mécaniques (30) n'assurent cette fonction de support qu'en présence d'un défaut du composant mécanique et les autres moyens (40) comportent des moyens optiques permettant de surveiller le composant mécanique ou des moyens électriques montés au moins partiellement sur le composant mécanique.

2. Attraction foraine (10) conforme à la revendication 1,
**caractérisée en ce que**
les moyens électriques (40) génèrent un signal d'arrêt d'urgence.

3. Attraction foraine (10) conforme à la revendication 1 ou 2,
**caractérisée en ce que**
les moyens mécaniques (30) comportent un autre composant redondant permettant d'assurer la fonction du composant mécanique, le composant mécanique et l'autre composant étant couplés à un dispositif de commande.

4. Attraction foraine (10) conforme à la revendication 3,
**caractérisée en ce que**
le couplage du dispositif de commande (140) avec le composant mécanique et l'autre composant est réalisé par voie électronique, électromagnétique et/ou optique.

5. Attraction foraine (10) conforme à l'une des revendications 1 à 6,
**caractérisée en ce que**
le composant mécanique est un tube creux (100) dans lequel est montée une tige (120) constituant l'autre composant.

6. Attraction foraine (10) conforme à la revendication 5,
**caractérisée en ce que**
le tube creux (100) et la tige (120) sont couplés électriquement et/ou optiquement de sorte qu'un contact du tube creux (100) et de la tige (120) fournissent un signal de défaut à une unité de commande (140).

7. Attraction foraine (10) conforme à l'une des revendications 1 à 6,
**caractérisée en ce que**
le dispositif (10) peut être ajouté postérieurement à des attractions foraines existantes.

8. Attraction foraine (10) conforme à l'une des revendications précédentes,
**caractérisée en ce qu'**
une modification d'au moins une caractéristique dans au moins un composant (50) peut être identifiée par les moyens électriques (40) lors du fonctionnement de l'attraction foraine.

9. Attraction foraine (10) conforme à l'une des revendications précédentes,
**caractérisée en ce que**
la compensation de la modification de la caractéristique du composant (50) dont une modification a été identifiée par les moyens électriques (40) est effectuée par les seconds moyens (30) pendant le fonctionnement de l'attraction foraine.

10. Attraction foraine (10) conforme à l'une des revendications précédentes,
**caractérisée en ce qu'**
en cas d'absence d'identification d'une modification d'au moins une caractéristique dans au moins un composant (50), les moyens mécaniques (30) sont passifs et/ou déchargés concernant leur fonction de sécurité.

11. Attraction foraine (10) conforme à l'une des revendications précédentes,
**caractérisée en ce que**
le système mécatronique (20) est monté sur des composants (50) mobiles ou stationnaires.

12. Attraction foraine (10) conforme à l'une des revendications précédentes,
**caractérisée en ce que**
les moyens électriques (40) permettent d'identifier une usure et/ou une variation du comportement de support d'un composant (50).

13. Attraction foraine (10) conforme à l'une des revendications précédentes,
**caractérisée en ce que**
les moyens électriques (40) permettent d'identifier une défaillance totale d'au moins un composant (50).

14. Attraction foraine (10) conforme à la revendication 13,
**caractérisée en ce que**
les moyens électriques (40) permettent de déclencher un arrêt d'urgence de l'attraction foraine en cas d'identification de la défaillance totale.

15. Attraction foraine (10) conforme à l'une des revendications précédentes,
**caractérisée en ce qu'**
elle comporte en tant que composants (50) des ensembles soudés et/ou des boulons, des éléments de liaison, en particulier des vis et/ou des articulations.

16. Attraction foraine (10) conforme à l'une des revendications précédentes,
**caractérisée en ce que**
les moyens électriques (40) du système mécatronique (20) comportent des éléments permettant de traiter au moins un signal électrique.

17. Attraction foraine (10) conforme à l'une des revendications précédentes,
**caractérisée en ce que**
les moyens mécaniques (30) du système mécatronique (20) comportent des modules mécaniques, en particulier des éléments de support.

18. Procédé (10) permettant d'augmenter la sécurité d'attractions foraines, à savoir des carrousels ou des montagnes russes conforme à l'une des revendications 1 à 17,
comportant les étapes suivantes consistant à :
- se procurer un dispositif de capteurs permettant de détecter quand le composant mécanique dont la sécurité doit être assurée est remplacé dans sa fonction par un composant redondant, le dispositif de capteurs étant au moins partiellement monté sur le composant dont la sécurité doit être assurée, et
- générer un signal de défaut dès que le dispositif de capteurs détecte le fait que la fonction de support est assurée par un composant redondant.

19. Procédé (10) conforme à la revendication 18,
**caractérisé en ce qu'**
en cas d'identification par le système mécatronique (20) d'une défaillance totale d'au moins un composant (50) de l'attraction foraine, le système mécatronique (20) arrête d'urgence cette attraction foraine.

20. Procédé (10) conforme à la revendication 18,
**caractérisé en ce que**
des signaux de surveillance sont générés et exploités en permanence ou de façon aléatoire pendant le fonctionnement de l'attraction foraine pour permettre de surveiller la disponibilité du système mécatronique.
